# EUROPEAN PATENT SPECIFICATION

(11) **EP 1 358 725 B1**
(45) Date of publication and mention of the grant of the patent: **08.11.2006**
(21) Application number: 01971381.7
(22) Date of filing: 27.08.2001
(51) Int. Cl.: H04H 9/00, H04H 1/02, H04N 7/10

(54) **System and method for bandwidth allocation to channels for broadcasting programs**
System und Verfahren für die Zuordnung von Bandbreiten zu Kanälen bei der Übertragung von Rundfunkprogrammen.
Système et procédé pour l'allocation de bande passante pour la diffusion des programmes

(30) Priority: 25.08.2000 US 227823 P; 23.08.2001 US 935873
(43) Date of publication of application: 05.11.2003
(73) Proprietor: Intellocity USA, Inc., Denver, CO 80202 (US)
(72) Inventor: LEMMONS, Thomas, Evergreen, CO 80439 (US)
(74) Representative: Glawe, Delfs, Moll
(86) International application number: PCT/US2001/041891
(87) International publication number: WO 2002/017523

(56) References cited:
- US-A- 4 935 924
- US-A- 5 329 370
- US-A- 5 751 883
- US-A- 5 940 738
- US-A- 5 956 338
- TAK-SHING ET AL: "Dynamic channel assignment in integrated-services cable network" COMMUNICATIONS - RISING TO THE HEIGHTS. DENVER, JUNE 23 - 26, 1991, PROCEEDINGS OF THE INTERNATIONAL CONFERENCE ON COMMUNICATIONS, NEW YORK, IEEE, US, vol. 1, 23 June 1991 (1991-06-23), pages 92-98, XP010044258 ISBN: 0-7803-0006-8

## Description

### Background

### a. Field

The present invention relates to subscriber networks as may be employed to carry television or other subscriber services and, more particularly, to a method and system of optimizing utilization of available bandwidth and content.

### b. Description of the Background

Television broadcast networks, such as cable television systems and satellite television systems, frequently provide data services to customers. Such data services may include Internet access, news services, market information, sports, or other services. These services may employ broadcast channels for downstream data transfer. As the number of data service subscribers increases, the network operator may elect to employ additional downstream channels, or if additional channels are not available, the network operator may attenuate the bandwidth available to each user. The bandwidth available may limit the number of customers that may be supported, reducing revenue generated, and attenuated bandwidth may result in reduced customer satisfaction.

Some cable system operators may broadcast all channels in their lineup continuously, twenty-four hours of every day of the year. Occasionally, one or more channels may be "Off the Air", but the cable system operator may utilize the bandwidth of the channel to simply transmit a notice on the channel indicating that the program is off the air. Further, there may be times when no viewers tune a certain channel, as may occur during times of low usage, such as between the hours of midnight and five AM on workdays, for example. In US-A-5 940 738 a method for managing network bandwidth is disclosed. In a network across which a plurality of channels are broadcasted to a plurality of receivers it is determined which of the channels is not tuned by any of the receivers. Once such channel or channels are identified, a broadcasting on this channel is halted. Channels not being viewed, either through being off the air or whatever reason, offer an opportunity for the bandwidth to be allocated to other services, such as Internet access. Therefore a new method, operable to determine a channel or channels not being viewed and to allocate non-viewed channels to other services, is desired in order to improve data services bandwidth, thereby creating the opportunity for an increased number of users, increased revenue and increased customer satisfaction.

### Summary of the Invention

The present invention overcomes the disadvantages and limitations of the prior art by providing a system and method of monitoring channel viewing and reallocating non-viewed channels for data services. Receivers in a network are configured to transmit indicators of the channel viewed. A unit located at the head-end, or in communication with the head-end, compiles information from the indicators to determine which channels are tuned. Channels not tuned by a receiver may be allocated for data services. If a receiver is tuned to a channel that has been allocated for data services, the present invention restores broadcast of the program scheduled for that channel.

The invention may therefore comprise a method of managing television network bandwidth comprising: broadcasting a plurality of programs on a plurality of channels to a plurality of receivers across the network; identifying each channel of the plurality of channels that is tuned by at least one receiver of the plurality of receivers connected to the network; determining if one channel of the plurality of channels is not tuned by any one of the plurality of receivers; and if one channel of the plurality of channels is not tuned by any one of the plurality of receivers, broadcasting a program on that channel at a reduced data rate.

The invention may further still comprise a method of managing television network bandwidth comprising: broadcasting a plurality of programs on a plurality of channels to a plurality of receivers across the network; identifying each channel of the plurality of channels that is tuned by at least one receiver of the plurality of receivers connected to the network; determining if one channel of the plurality of channels tuned is a channel that has been configured to operate at a reduced data rate; and if one channel of the plurality of channels tuned by any one of the plurality of receivers is a channel that has been configured to operate at a reduced data rate, configuring that channel to operate at a higher data rate.

Further yet, the present invention provides for reduced bandwidth transmission of non-viewed channels such that viewers switching through channels may be provided with an indication of the program content, and if a viewer tunes to a channel for a specified duration, the bandwidth of the channel is restored to normal broadcast rates.

The invention further comprises a system comprising a head-end system, a network being configured to transmit signals comprising a plurality of programs on a plurality of channels, a plurality of receivers, the receivers being configured to transmit indicators for channels tuned, wherein the head-end system is being configured to identify if one channel of said plurality of channels is not tuned by any of said plurality of receivers, and if one channel of said plurality of channels is not tuned by any of said plurality of receivers, halting transmission of a program on said one channel and broadcasting information on said one channel, wherein the head-end system is further configured to execute the halting transmission of a program and broadcasting information on said one channel by broad-casting said program on said one channel at a reduced data rate.

Advantageously, the present invention provides a system and method well suited to automated reallocation of channel bandwidth when a channel is not viewed. The reallocated bandwidth may be employed for data services and may be used to provide higher transfer rates to a group of users, or may be used to support additional users, or both. The present invention also provides method to restore program broadcast if program content comprises a commercial message or a public service message. The present invention is also applicable to 'mixed' systems comprising both receivers capable of sending upstream messages, and receivers not capable of sending upstream messages. In such systems, the present invention may be employed to reallocate bandwidth associated with channels that are accessed only by request, such as pay per view channels. Additionally, some systems may broadcast both analog and digital television formats wherein digital receivers may provide upstream communication, allowing reallocation of bandwidth of non-viewed digital channels.

### Description of the Figures

In the figures,
Figure 1 depicts a cable television broadcast system employing the present invention.
Figure 2 is a diagram illustrative of the NTSC frequency map for standard 6-MHz cable television channel bands in North America.
Figure 3 depicts a set top receiver.
Figure 4 depicts the format of MPEG packets.
Figure 5 depicts an algorithm for reassigning channels for explanatory purposes.
Figure 6 depicts an algorithm for restoring service for explanatory purposes.
Figure 7 depicts an algorithm for reassigning channels according to the invention.
Figure 8 depicts an algorithm for restoring service according to the invention.
Figure 9 depicts operation of a software program that may be employed by a receiver to transmit channel information to a head-end system or node of a network.

### Detailed Description of the Invention

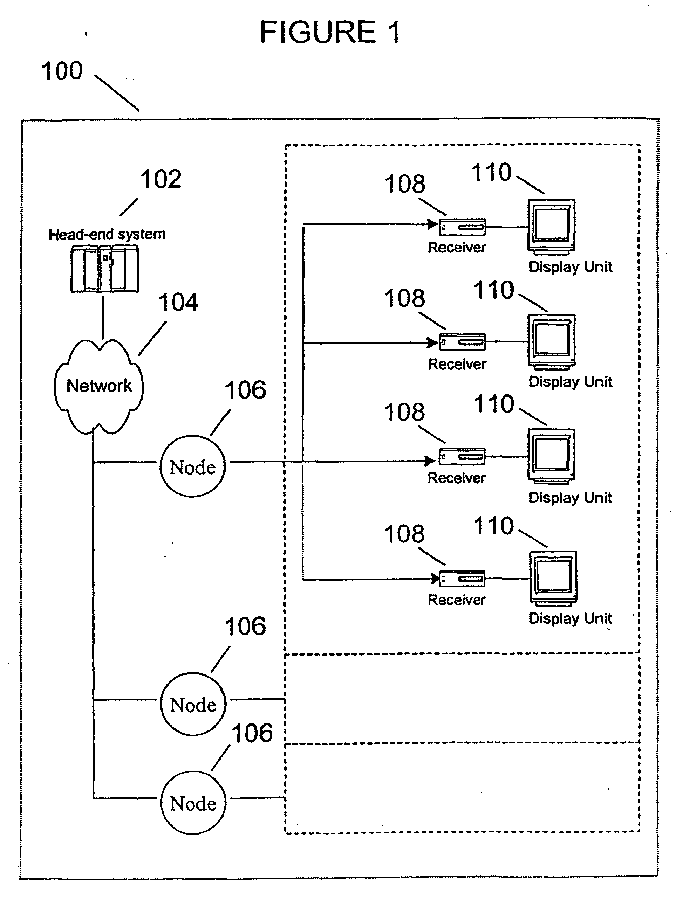

Figure 1 depicts a cable television broadcast system 100 comprising head-end system 102, network 104, nodes 106, receivers 108, and display units 110. Head-end system 102 delivers television programming to the receivers 110, via network 104 and nodes 106. Head-end system 102 may comprise components from R.L. Drake Company located at 230 Industrial Drive, Franklin OH 45005 U.S.A. or components from Cisco Systems Inc., located at 170 West Tasman Dr. San Jose, CA 95134 USA.

Network 104 may comprise fiber optic, coaxial cable, terrestrial or satellite transmission, or combinations thereof, as is common to the art. Nodes 106 are frequently coaxial cable but are not limited to this material. Receivers 108 convert the incoming programming information into a format appropriate for input to display units 110, and thus for viewing by end users of the system 100. Receivers 108 may comprise set-top boxes, personal computers, interactive televisions, or other equipment operable to process television signals and other information, such as control information and program guides, for example. Display units 110 may comprise televisions, computer monitors, or other devices operable to display video images.

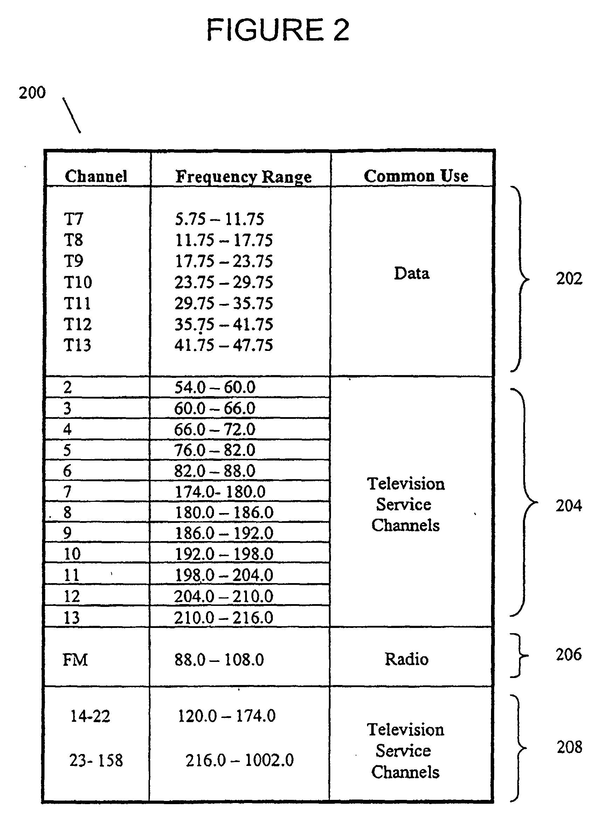

Television broadcast typically employs frequency division multiplexed signals wherein a plurality of programs is broadcast simultaneously, each in a predefined frequency range, or channel. Figure 2 is illustrative of the NTSC frequency map for standard 6-MHz cable television channel bands in North America. Label 202 of figure 2 indicates frequencies that may be employed for data transfer, such as may be utilized for upstream data transfer by cable modems or set top boxes. Label 204 indicates the frequencies assigned to television channels two through thirteen. Label 206 indicates the frequencies assigned to FM radio. Frequencies indicated by labels 204 and 208 are referred to as service channels. Label 208 indicates frequencies assigned to channels 23 to 158 wherein each channel shares an adjacent 6 MHz band. Other standards, such as Phase Alternating Line (PAL) and Systeme Electronique Couleur Avec Memoire (SECAM) employ an 8-MHz channel band.

Head-end system 102 transmits signals, to receivers 108, comprising a number of predefined video service channels, each video service channel occupying a separate portion of available spectrum. A video service channel is a channel, conforming to a standard, either public or proprietary, that may contain a video program. A video service channel may employ analog or digital formats.

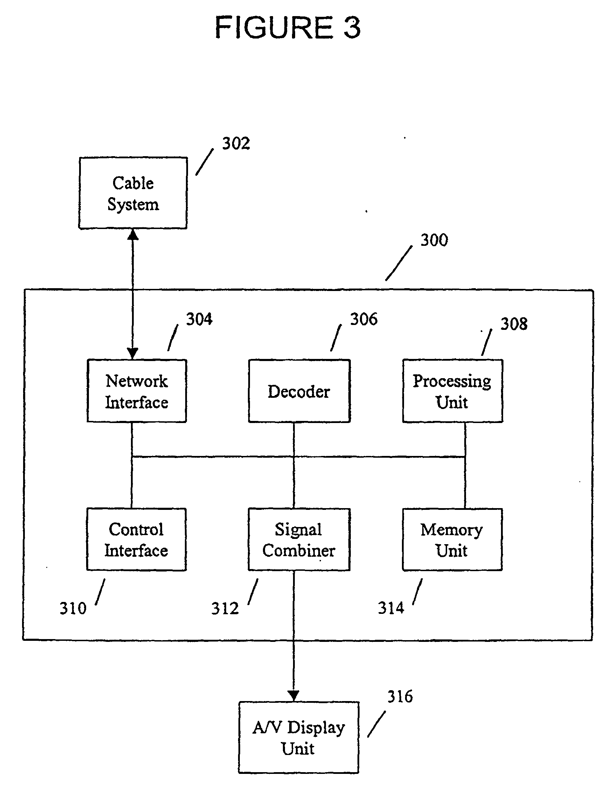

Figure 3 depicts a set top receiver. Receiver 300 comprises network interface 304, decoder 306, processing unit 308, control interface 310, signal combiner 312, and memory unit 314. Decoder 306 may provide conversion of MPEG data into displayable formats. Control interface 310 may receive signals from a remote control or other input device. Signal combiner 312 is operable to combine video information with other information such as on-screen menus or program guides, for example. Memory unit 314 may contain instructions for processing unit 308 and may contain menu information, channel look-up tables, and other information. Receiver 300 may be updated through downloading of instructions from cable system 302 to memory unit 314. Receiver 300 is connected to cable system 302 via network interface 304. Network interface 304 may comprise analog and digital communications formats and may support upstream communication to cable system 302.

A television channel may be employed to carry one analog television program or may employ digital encoding, such as QAM (Quadrature Amplitude Modulation), or QPSK (Quadrature Frequency Shift Keying) to transmit digital information. Such digital information may comprise signals of a cable modem, or may comprise digital television signals. For cable modems, upstream communications (from the receiver to the head-end or node) typically employ QPSK signaling in frequencies shown at label 202 in figure 2. Downstream communication may employ higher frequencies and may employ QAM signaling. Digital television typically employs QAM signaling to transfer MPEG packets for a plurality of television programs within the band used for a single analog channel. For example, digital television may carry 5 or 6 digital programs in the 6 MHz band used for a single analog program broadcast. When a plurality of digital channels are broadcast on a channel, the set top box may, in response to a channel number selected by the viewer, be programmed to tune a specific 6 MHz band (8 MHz for PAL and SECAM) and then present audio and video information from the MPEG stream identified by a set of specific packet IDs (PIDs). A receiver unit such as that depicted in figure 3 may employ a lookup table to associate a digital television channel number with a specific analog channel and packet ID.

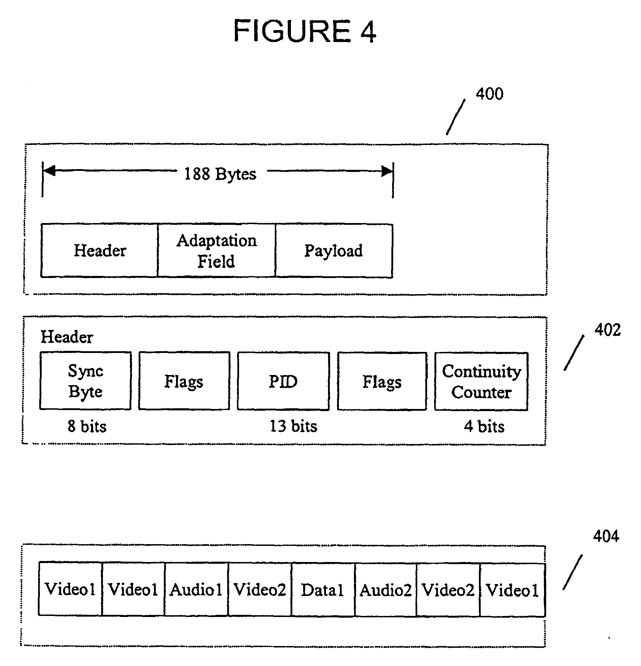

Figure 4 depicts the format of MPEG packets. Packet 400 comprises header, adaptation field, and payload sections. MPEG-2 employs packets of 188 bytes each. Header information 402 depicts header components, including packet ID (PID). Typically, four types of PIDs are employed. A VPID is the PID for the video stream and an APID is the PID for an audio stream. A PCR PTD (program clock reference) may be used to synchronize the video and audio packets. Clock reference data is often embedded into the video stream. A system information PID may be used to indicate data such as a program guide, information about other channels, or may be employed to indicate a data packet not associated with a video or audio program. MPEG stream 404 depicts a stream of packets associated with audio and video for first and second channels, and data for a first data channel. In practice, more audio and video channels, or a greater number of data channels may be present in an MPEG stream.

In an embodiment of the present invention, the receiver of figure 3 may be programmed to issue an upstream message to the head-end system when it is first turned on, when it is being turned off, or when it is determined that the viewer has selected a new channel to be viewed. Such determination may comprise a minimum time period for a channel to be selected before it is reported that a new channel has been tuned, thereby accommodating users that flip through a range of channels (i.e. channel surfing), before selecting a channel to view for a more extended duration. Each receiver in the cable system network communicates the channel tuned when the receiver is turned on (CH-ON), or the previous channel viewed (CH-OLD) and the new channel (CH-NEW) selected when channels are changed, and the channel tuned when a user selects the 'off button on a remote (CH-OFF), to the head-end system.

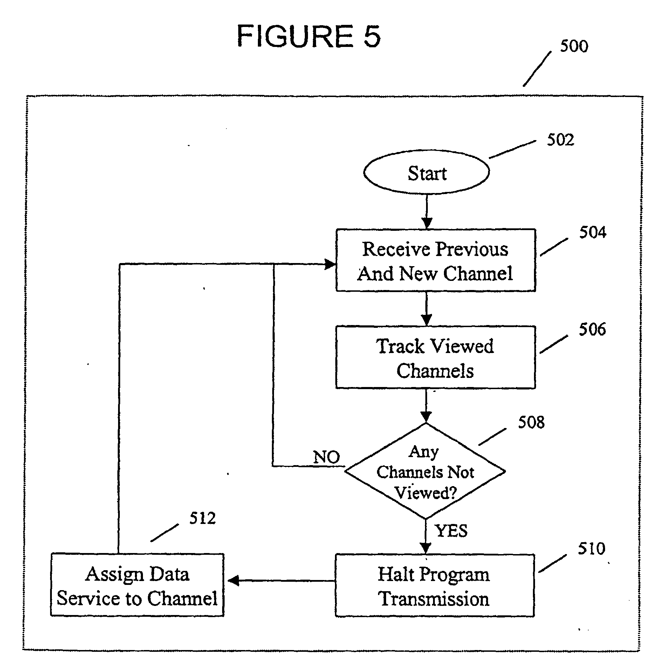

Figure 5 depicts an algorithm for reassigning channels. Reassignment process 500 starts at step 502. At step 504, information from a receiver indicating CH-ON, CH-OLD and CH-NEW, or CH-OFF, is received. At step 506, a list of viewed channels is produced. Production of the list may comprise establishing a count of viewers for each channel and decrementing the count for each indication CH-OLD or CH-OFF and incrementing the count for each indication of CH-ON or CH-NEW. Receivers may be polled at some time to determine an initial count of channels viewed. At step 508, the list of viewed channels is checked to determine if any channels are not viewed. If all channels are being viewed, processing continues at step 504. If a channel is found that is not being viewed, transmission of the television program on that channel is halted at step 510. At step 512, a data service is assigned to the non-viewed channel. Assignment of the data service may comprise allocating packets in an MPEG stream to data services, or may comprise assigning an entire analog channel for data service communication. An entire analog channel may be assigned to data services if a program broadcast in analog format in the channel is not being viewed, or if all of the programs that may be digitally encoded and broadcast in the analog channel are not being viewed.

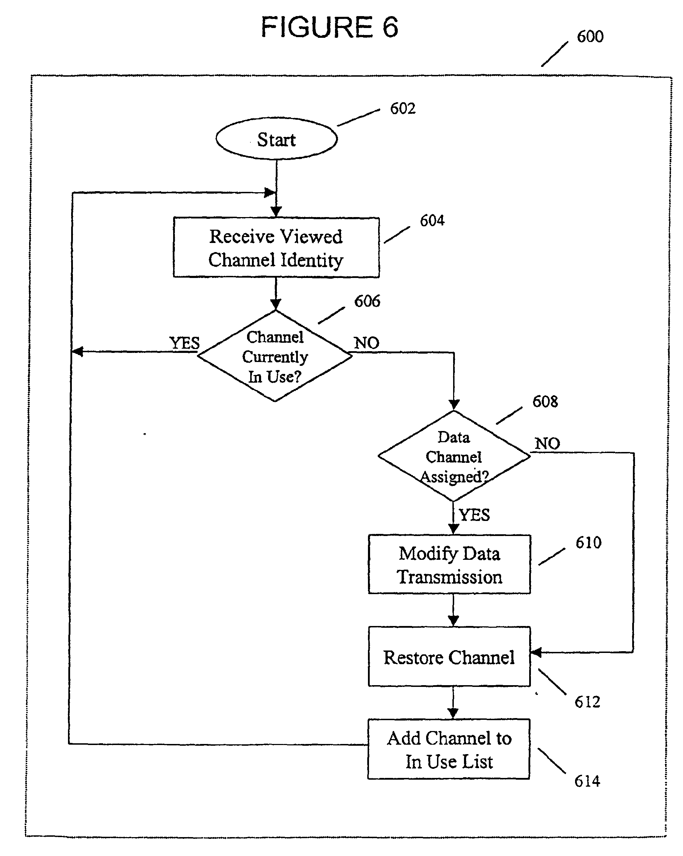

Operating in conjunction with reassignment process 500 is restoration process 600. Figure 6 depicts an algorithm for restoring service. Restoration process 600 starts at step 602. At step 604, information from a receiver indicating CH-ON or CH-NEW is received. At step 606, the information received in step 604 is compared with a list of channels in use. If the channel is presently being viewed, processing continues at step 604. If the comparison at step 606 finds that the channel tuned is not currently broadcast, step 608 checks if the channel is being used for data services. If step 608 determines that the channel is not being used for data services, program transmission is restored at step 612 and at step 614 the channel is added to the currently viewed list. If step 608 determines that the channel is being used for data services, at step 610 data transmission is modified, then program transmission is restored at step 612 and at step 614 the channel is added to the currently viewed list. Processing then continues at step 604. The modification of data transmission of step 610 may comprise reducing the number of data packets assigned to data services in an MPEG stream, or may comprise assigning data services to a different channel.

In an embodiment of the present invention, the data rate for a non-viewed channel may be reduced such that the displayed image may provide a slower frame rate than full data rate presentations. For example, in MPEG formats, the rate at which new frame information is supplied may be reduced, allowing data services to employ packets not used for the video program. The method of reduced data rate MPEG has the advantage of providing an indication of program content for viewers that may switch (i.e. surf) through channels quickly. If a viewer tunes to a reduced data rate channel for a period beyond a predetermined duration, the data rate may be restored to full data rate. In another embodiment, the data rate of an MPEG stream may be restored to fall data rate if paid advertising is being shown.

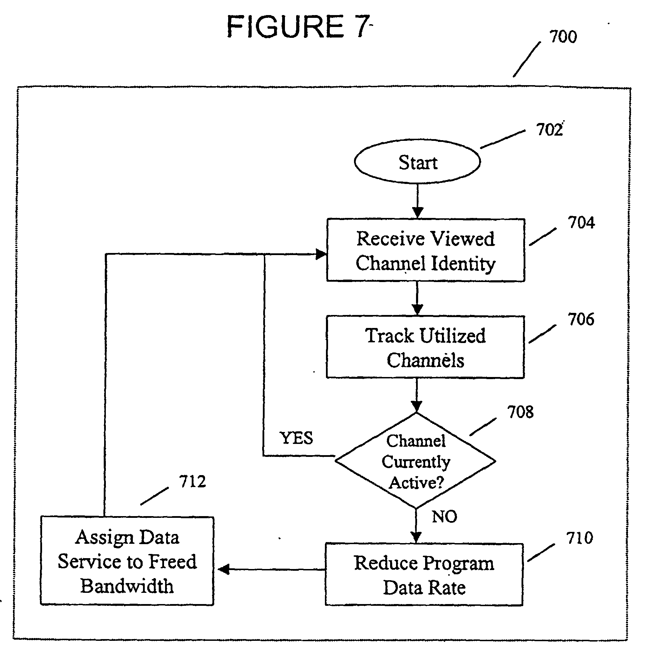

Figure 7 depicts an algorithm for reassigning channels. Reassignment process 700 begins at step 702. At step 704, information from a receiver indicating CH-ON, CH-OLD and CH-NEW, or CH-OFF, is received. At step 706, a list of viewed channels is produced. At step 708, the list of viewed channels is checked to determine if any channels are not viewed. If all channels are being viewed, processing continues at step 704. If a channel is found that is not being viewed, reduced data rate transmission of the program is implemented at step 710. At step 712, a data service is assigned to the bandwidth freed through reduced data rate transmission. Assignment of the data service may comprise allocating packets in an MPEG stream to data services.

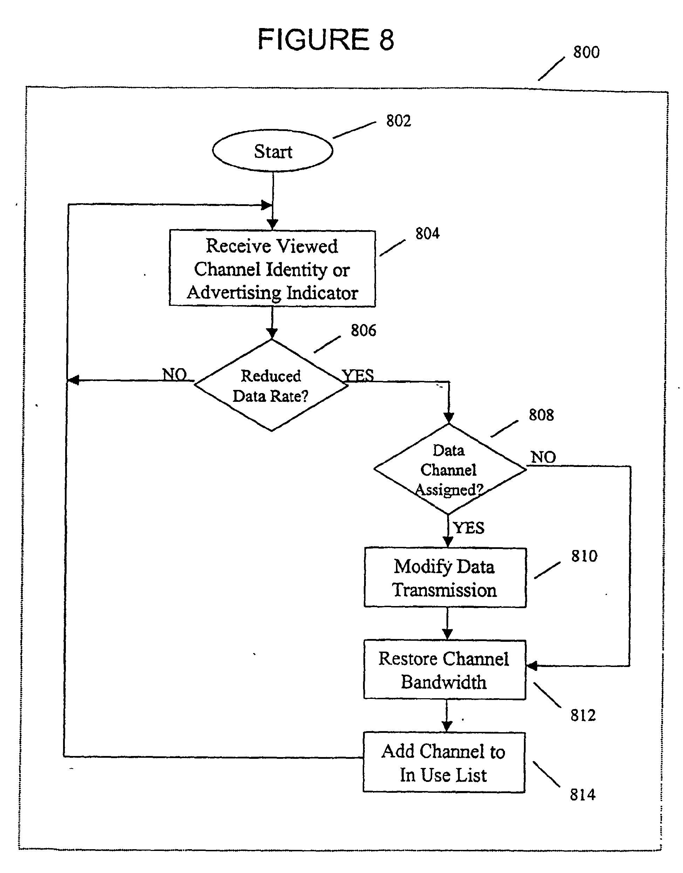

Figure 8 depicts an algorithm for restoring service. Restoration process 800 starts at step 802. At step 804, information from a receiver indicating CH-ON, CH-NEW, or, optionally, an indictor of an advertising message is received. At step 806, the information received in step 804 is compared with a list of channels operating at reduced data rates. If the channel is presently presented at full bandwidth, processing continues at step 804. If the comparison at step 806 finds that die channel tuned is broadcast at a reduced data rate, step 808 checks if the channel is being used for data services. If the channel is not being used for data services, full data rate program transmission is restored at step 812 and at step 814 the channel is added to the list of channels presented at full data rate. If step 808 determines that the channel is being used for data services, at step 810 data transmission is modified, then program transmission is restored to full data rate at step 812 and at step 814 the channel is added to the list of channels operating at full data rate. Processing then continues at step 804. The modification of data transmission of step 810 may comprise reducing the number of data packets assigned to data services in an MPEG stream, or may comprise assigning data services to a different channel.

Alternate methods may be employed to determine the channels that are tuned by receivers of the network. For example, receivers may transmit information identifying both the receiver and the channel tuned when turned on or off, or when a new channel is selected, allowing a list of receivers and channels to be formulated and non-tuned, channels to be identified. Polling methods may also be employed. For example, if it is determined that the number of viewers for a specific channel is less than a predetermined value, receivers may be polled to confirm the determined value. Further, trend information may be employed to determine channels that exhibit periods when no receivers are tuned, such that only those channels are tracked, reducing the amount of information processed. Restoration of broadcast of a program during advertising has been disclosed. Restoration may also be performed as a result of public service messages such as weather warnings or other information. The foregoing description has employed examples related to cable television systems, however the method and system of the invention may be employed in satellite or other systems where upstream communication is supported.

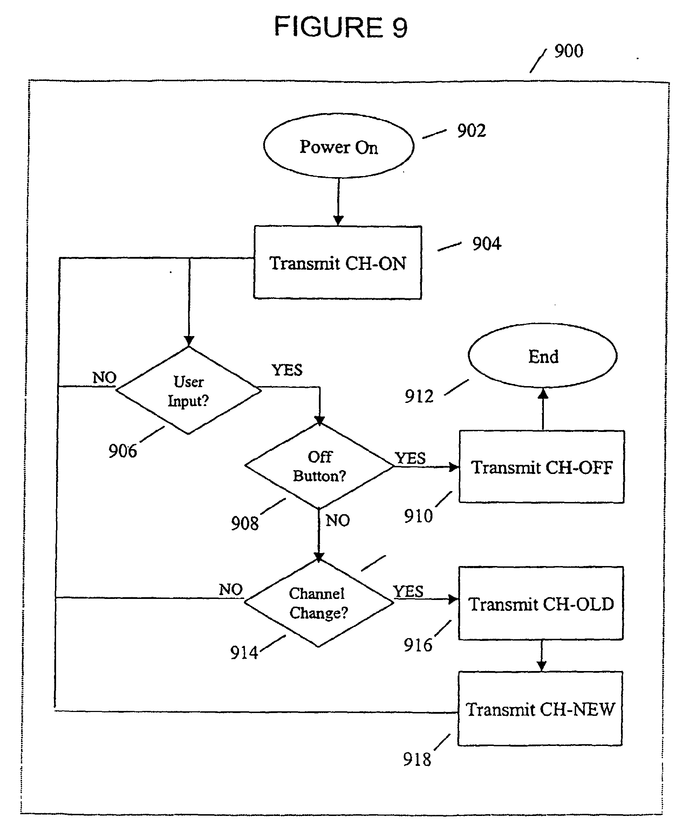

As noted previously, set top boxes, satellite receivers, or other receiving equipment allow downloading of software across a network. Figure 9 depicts operation of a software program that may be employed by a receiver to transmit channel information to a head-end system or node of a network. Receiver program 900 starts at step 902 where the unit is enabled or powered on. After the receiver is powered on or enabled, step 904 transmits CH-ON. As with most televisions, CH-ON is the channel tuned when the receiver was powered down or disabled and is the channel displayed when the unit is powered on or enabled. After step 904, step 906 determines if user input has been received, such as from a remote control or other input. If no user input has been received, processing continues with step 906. When a user input is received, step 908 checks if the user input is equivalent to an off button selection. If the result of the check performed by step 908 is that an off button has been selected, step 910 transmits a CH-OFF message and processing ends at step 912. If the result of the check performed by step 908 is that an off button was not selected, step 914 checks if the user input was a channel change. If the result of the check or step 914 is that the user input was not a channel change, processing continues at step 906.If the result of the check performed by step914 is that, the user input was a channel change, step 916 transmits CH-OLD to indicate the previous channel, and step 918 transmits CH-NEW, indicating the new channel tuned. Processing then continues at step 906. Figure 9 is illustrative of software that may be employed with one embodiment of the invention. If, as previously mentioned, the receiver is configured to transmit information identifying both the receiver and the channel selected, the method of figure 9 may be modified such that steps 910 and 916 are removed, and processing would continue on the path shown following these steps.
The present invention therefore provides a system and method for reallocating bandwidth normally expended transmitting content not viewed, to services that may provide additional user satisfaction and may provide additional revenue. Advantageously the present invention provides a method for timely reestablishment of a broadcast program should a user tune to a previously non-viewed channel. The present invention also provides a method for broadcasting non-viewed programs at reduced bandwidth, providing a representation of channel content for viewers that switch through channels. Further, the present invention provides a method for restoring bandwidth during commercial or public service messages, allowing fulfillment of advertising and community service goals.

The foregoing description of the invention has been presented for purposes of illustration and description. It is not intended to be exhaustive or to limit the invention to the precise form disclosed, and other modifications and variations may be possible in light in the above teachings. The embodiment was chosen and described in order to best explain the principles of the invention and its practical application to thereby enable others skilled in the art to best utilize the invention in various embodiments and various modifications as are suited to the particular use contemplated.

## Claims

1. A method of managing network bandwidth comprising:
broadcasting a plurality of programs on a plurality of channels to a plurality of receivers (108) across said network (104);
identifying (704) each channel of said plurality of channels that is tuned by at least one receiver of (108) said plurality of receivers (108) connected to said network (104);
determining (706) if one channel of said plurality of channels is not tuned by any one of said plurality of receivers (108); and
if one channel of said plurality of channels is not tuned by any one of said plurality of receivers (108), halting (708) transmission of a program on said one channel and broadcasting information on said one channel,
**characterized in that**
said step of halting transmission of a program and broadcasting information on said one channel comprises broadcasting said program on said one channel at a reduced data rate (710).

2. The method of claim 1 wherein said information that is broadcast is other than a program.

3. The method of claim 1 or 2 further comprising the step of:
reallocating bandwidth of said one channel for data service; and
if said one channel is tuned by any one of said plurality of receivers reestablishing broadcast of the program on said one channel.

4. A method for managing network bandwidth comprising:
broadcasting a plurality of programs on a plurality of channels to a plurality of receivers (108) across said network (104);
identifying (804) each channel of said plurality of channel that is tuned by at least one receiver (108) of said plurality of receivers connected to said network (104);
**characterized by**
determining (806) if one channel of said plurality of channels tuned is a channel that has been configured to operate at a reduced data rate; and
if one channel of said plurality of channels tuned by any one of said plurality of receivers (108) is a channel that has been configured to operate at a reduced data rate, configuring (810) said one channel to operate at a higher data rate.

5. The method of claim 1, 2, 3 or 4 wherein said step of identifying further comprises:
receiving a signal from each receiver (108) of said plurality of receivers (108), said signal indicating the channel tuned (904, 918).

6. The method of claim 1, 2, 3 or 4 wherein said step of identifying further comprises:
receiving a signal from each receiver (108) of said plurality of receivers (108), said signal indicating the channel tuned (918) and the previous channel tuned (916).

7. The method of claim 1, 2, 3 or 4 wherein said step of identifying further comprises:
receiving a signal from each receiver (108) of said plurality of receivers (108), said signal indicating the channel tuned if a user has selected a receiver function discontinuing (910) reception of any channel

8. The method of claim 4, 5, 6 or 7 wherein said step of determining comprises:
determining (808) if a message comprising a commercial message or public service announcement is contained in said one channel; and
if said one channel contains said message, configuring (810, 812) said one channel to operate at a higher data rate.

9. A system for broadcasting television programs comprising:
a head-end system (102),
a network (104) being configured to transmit signals comprising a plurality of programs on a plurality of channels,
a plurality of receivers (108), the receivers (108) being configured to transmit indicators for channels tuned,
wherein the head-end system (102) is being configured to identify (704) if one channel of said plurality of channels is not tuned by any of said plurality of receivers (108), and if one channel of said plurality of channels is not tuned by any of said plurality of receivers (108), halting (708) transmission of a program on said one channel and broadcasting information on said one channel,
**characterized in that**
the head-end system (102) is further configured to execute the halting (708) transmission of a program and broadcasting information on said one channel by broadcasting said program on said one channel at a reduced data rate (710).

10. The system of claim 9 wherein the head-end system (102) is further configured to reallocate bandwidth of said one channel for data service; and
if said one channel is tuned by any one of said plurality of receivers (108) to reestablish broadcast of the program on said one channel.

11. The system of claim 9 wherein
the head-end system (102) is further configured to determine if one channel of said plurality of channels tuned is a channel that has been configured to operate at a reduced data rate; and
if one channel of said plurality of channels tuned by any one of said plurality of receivers (108) is a channel that has been configured to operate at a reduced data rate, configuring (812) said one channel to operate at a higher data rate.

12. The system of claim 9,10 or 11 wherein the receiver (108) comprises a processing unit executing a program, the program being operable to transmit an upstream message to the head-end system (102).

13. The system of claim 12 wherein said message comprises a channel number.

14. The system of claim 12 wherein said message comprises a channel number and a previous channel number.

15. The system of claim 12 wherein the message comprises a receiver (108) identifier.

16. The system of claim 12 wherein the program further comprises a routine operable to transmit (910) a message if said receiver (108) is in transition from an operational state to a quiescent state.

## Patentansprüche

1. Verfahren zur Verwaltung von Netzwerkbandbreite, mit den folgenden Schritten:
Ausstrahlen mehrerer Programme auf mehreren Kanälen zu mehreren Empfängern (108) über das Netzwerk (104);
Identifizieren (704) jedes Kanals der mehreren Kanäle, der von mindestens einem Empfänger (108) der mehreren mit dem Netzwerk (104) verbundenen Empfänger (108) eingestellt ist;
Bestimmen (706), ob ein Kanal der mehreren Kanäle von keinem der mehreren Empfänger (108) eingestellt ist; und
wenn ein Kanal der mehreren Kanäle von keinem der mehreren Empfänger (108) eingestellt ist, Anhalten (708) der Übertragung eines Programms auf dem einen Kanal und Ausstrahlen von Informationen auf dem einen Kanal,
**dadurch gekennzeichnet, dass**
der Schritt des Anhaltens der Übertragung eines Programms und des Ausstrahlens von Informationen auf dem einen Kanal das Ausstrahlen des Programms auf dem einen Kanal mit einer verminderten Datenrate (710) umfasst.

2. Verfahren nach Anspruch 1, wobei die Informationen, die ausgestrahlt werden, von einem Programm verschieden sind.

3. Verfahren nach Anspruch 1 oder 2, ferner mit dem folgenden Schritt:
Neuzuteilen von Bandbreite des einen Kanals für Datendienst; und
wenn einer der mehreren Empfänger den einen Kanal eingestellt hat, Wiederherstellen der Ausstrahlung des Programms auf dem einen Kanal.

4. Verfahren zur Verwaltung von Netzwerkbandbreite, mit den folgenden Schritten:
Ausstrahlen mehrerer Programme auf mehreren Kanälen zu mehreren Empfängern (108) über das Netzwerk (104);
Identifizieren (804) jedes Kanals der mehreren Kanäle, der von mindestens einem Empfänger (108) der mehreren mit dem Netzwerk (104) verbundenen Empfänger (108) eingestellt ist;
**gekennzeichnet durch**
Bestimmen (806), ob ein Kanal der mehreren Kanäle, der eingestellt ist, ein Kanal ist, der für einen Betrieb mit einer verminderten Datenrate konfiguriert wurde; und
wenn ein Kanal der mehreren Kanäle, auf den ein beliebiger der mehreren Empfänger (108) eingestellt ist, ein Kanal ist, der für einen Betrieb mit einer verminderten Datenrate konfiguriert wurde, Konfigurieren (810) des einen Kanals für Betrieb mit einer höheren Datenrate.

5. Verfahren nach Anspruch 1, 2, 3 oder 4, wobei der Schritt des Identifizierens ferner folgendes umfasst:
Empfangen eines Signals von jedem Empfänger (108) der mehreren Empfänger (108), wobei das Signal den eingestellten Kanal angibt (904, 918).

6. Verfahren nach Anspruch 1, 2, 3 oder 4, wobei der Schritt des Identifizierens ferner folgendes umfasst:
Empfangen eines Signals von jedem Empfänger (108) der mehreren Empfänger (108), wobei das Signal den eingestellten Kanal (918) und den vorherigen eingestellten Kanal (916) angibt.

7. Verfahren nach Anspruch 1, 2, 3 oder 4, wobei der Schritt des Identifizierens ferner folgendes umfasst:
Empfangen eines Signals von jedem Empfänger (108) der mehreren Empfänger (108), wobei das Signal den eingestellten Kanal angibt, wenn ein Benutzer eine Empfängerfunktion ausgewählt hat, die den Empfang jeglicher Kanäle beendet (910).

8. Verfahren nach Anspruch 4, 5, 6 oder 7, wobei der Schritt des Bestimmens folgendes umfasst:
Bestimmen (808), ob eine Nachricht, die eine Werbenachricht oder eine Ansage des öffentlichen Service umfasst, in dem einen Kanal enthalten ist; und
wenn ein Kanal die Nachricht enthält, Konfigurieren (810, 812) des einen Kanals für einen Betrieb mit einer höheren Datenrate.

9. System zum Ausstrahlen von Fernsehprogrammen, umfassend:
ein Zentralensystem (102),
ein Netzwerk (104), das dafür konfiguriert ist, auf mehreren Kanälen Signale zu senden, die mehrere Programme umfassen,
mehrere Empfänger (108), wobei die Empfänger (108) dafür konfiguriert sind, Indikatoren für eingestellte Kanäle zu senden,
wobei das Zentralensystem (102) dafür konfiguriert ist, zu identifizieren (704), ob ein Kanal der mehreren Kanäle von keinem der mehreren Empfänger (108) eingestellt ist, und wenn ein Kanal der mehreren Kanäle von keinem der mehreren Empfänger (108) eingestellt ist, die Übertragung eines Programms auf dem einen Kanal anzuhalten (708) und Informationen auf dem einen Kanal auszustrahlen,
**dadurch gekennzeichnet, dass**
das Zentralensystem (102) ferner dafür konfiguriert ist, das Anhalten (708) der Übertragung eines Programms und das Ausstrahlen von Informationen auf den einen Kanal durch Ausstrahlen des Programms auf den einen Kanal mit einer verminderten Datenrate auszuführen (710).

10. System nach Anspruch 9, wobei das Zentralensystem (102) ferner dafür konfiguriert ist, Bandbreite des einen Kanals neu für Datendienst zuzuteilen; und
die Ausstrahlung des Programms auf dem einen Kanal wiederherzustellen, wenn der eine Kanal von irgendeinem der mehreren Empfänger (108) eingestellt wird.

11. System nach Anspruch 9, wobei
das Zentralensystem (102) ferner dafür konfiguriert ist, zu bestimmen, ob ein Kanal der mehreren Kanäle, der eingestellt ist, ein Kanal ist, der für einen Betrieb mit einer verminderten Datenrate konfiguriert wurde; und
wenn ein Kanal der mehreren Kanäle, auf den ein beliebiger der mehreren Empfänger (108) eingestellt ist, ein Kanal ist, der für einen Betrieb mit einer verminderten Datenrate konfiguriert wurde, den einen Kanal für Betrieb mit einer höheren Datenrate zu konfigurieren (812).

12. System nach Anspruch 9, 10 oder 11, wobei der Empfänger (108) eine Verarbeitungseinheit umfasst, die ein Programm ausführt, wobei das Programm betreibbar ist, um eine Aufwärtsnachricht zu dem Zentralensystem (102) zu senden.

13. System nach Anspruch 12, wobei die Nachricht eine Kanalnummer umfasst.

14. System nach Anspruch 12, wobei die Nachricht eine Kanalnummer und eine vorherige Kanalnummer umfasst.

15. System nach Anspruch 12, wobei die Nachricht eine Kennung des Empfängers (108) umfasst.

16. System nach Anspruch 12, wobei das Programm ferner eine Routine umfasst, die betreibbar ist, um eine Nachricht zu senden (910), wenn sich der Empfänger (108) im Übergang von einem Betriebszustand zu einem Ruhezustand befindet.

## Revendications

1. Procédé de gestion de la bande passante d'un réseau comprenant :
la diffusion d'une pluralité de programmes sur une pluralité de canaux vers une pluralité de récepteurs (108) au sein dudit réseau (104) ;
l'identification (704) de chaque canal de ladite pluralité de canaux qui est accordé par au moins un récepteur (108) de ladite pluralité de récepteurs (108) reliés audit réseau (104) ;
la détermination (706) du fait qu'un canal de ladite pluralité de canaux n'est pas accordé par un quelconque de ladite pluralité de récepteurs (108) ; et
si un canal de ladite pluralité de canaux n'est pas accordé par un quelconque de ladite pluralité de récepteurs (108), l'arrêt (708) de la transmission d'un programme sur ledit canal et de la diffusion d'informations sur ledit canal,
**caractérisé en ce que**
ladite étape d'arrêt de la transmission d'un programme et de diffusion d'informations sur ledit canal comprend la diffusion dudit programme sur ledit canal à un débit de données réduit (710).

2. Procédé selon la revendication 1, dans lequel lesdites informations qui sont diffusées sont autres qu'un programme.

3. Procédé selon la revendication 1 ou 2, comprenant en outre l'étape consistant à :
réattribuer la bande passante dudit canal pour le service de données ; et
si ledit canal est accordé par un quelconque de ladite pluralité de récepteurs, rétablir la diffusion du programme sur ledit canal.

4. Procédé de gestion de la bande passante d'un réseau comprenant :
la diffusion d'une pluralité de programmes sur une pluralité de canaux vers une pluralité de récepteurs (108) au sein dudit réseau (104) ;
l'identification (804) de chaque canal de ladite pluralité de canaux qui est accordé par au moins un récepteur (108) de ladite pluralité de récepteurs reliés audit réseau (104) ;
**caractérisé par**
la détermination (806) du fait qu'un canal de ladite pluralité de canaux accordés soit un canal qui a été configuré pour fonctionner à un débit de données réduit ; et
si un canal de ladite pluralité de canaux accordés par un quelconque de ladite pluralité de récepteurs (108) est un canal qui a été configuré afin de fonctionner à un débit de données réduit, la configuration (810) dudit canal afin de fonctionner à débit de données plus élevé.

5. Procédé selon la revendication 1, 2, 3 ou 4 dans lequel ladite étape d'identification comprend en outre :
la réception d'un signal de la part de chaque récepteur (108) de ladite pluralité de récepteurs (108), ledit signal indiquant le canal accordé (904, 918).

6. Procédé selon la revendication 1, 2, 3 ou 4, dans lequel ladite étape d'identification comprend en outre :
la réception d'un signal de la part de chaque récepteur (108) de ladite pluralité de récepteurs (108), ledit signal indiquant le canal accordé (918) et le canal précédent accordé (916).

7. Procédé selon la revendication 1, 2, 3 ou 4, dans lequel ladite étape d'identification comprend en outre :
la réception d'un signal de la part de chaque récepteur (108) de ladite pluralité de récepteurs (108), ledit signal indiquant le canal accordé si un utilisateur a sélectionné une fonction de récepteur interrompant (910) la réception d'un quelconque canal.

8. Procédé selon la revendication 4, 5, 6 ou 7, dans lequel ladite étape de détermination comprend :
la détermination (808) du fait qu'un message comprenant un message commercial ou une annonce de service public soit contenu dans ledit canal ; et
si ledit canal contient ledit message, la configuration (810, 812) dudit canal afin de fonctionner à un débit de données plus élevé.

9. Système de diffusion de programmes de télévision comprenant :
un système de point de départ (102),
un réseau (104) configuré afin de transmettre des signaux comprenant une pluralité de programmes sur une pluralité de canaux,
une pluralité de récepteurs (108), les récepteurs (108) étant configurés afin de transmettre des indicateurs pour les canaux accordés,
dans lequel le système de point de départ (102) est configuré afin d'identifier (704) si un canal de ladite pluralité de canaux n'est pas ajusté par un quelconque de ladite pluralité de récepteurs (108), et, si un canal de ladite pluralité de canaux n'est pas accordé par un quelconque de ladite pluralité de récepteurs (108), l'arrêt (708) de la transmission d'un programme sur ledit canal et de la diffusion d'informations sur ledit canal,
**caractérisé en ce que**
le système de point de départ (102) est en outre configuré afin d'exécuter l'arrêt (708) de la transmission d'un programme et de la diffusion d'informations sur ledit canal en diffusant ledit programme sur ledit canal à un débit de données réduit (710).

10. Système selon la revendication 9, dans lequel le système de point de départ (102) est en outre configuré afin de réattribuer la bande passante dudit canal pour un service de données ; et
si ledit canal est accordé par un quelconque de ladite pluralité de récepteurs (108), afin de rétablir la diffusion du programme sur ledit canal.

11. Système selon la revendication 9, dans lequel
le système de point de départ (102) est en outre configuré afin de déterminer si un canal de ladite pluralité de canaux ajustés est un canal qui a été configuré afin de fonctionner à un débit de données réduit ; et
si un canal de ladite pluralité de canaux accordés par un quelconque de ladite pluralité de récepteurs (108) est un canal qui a été configuré afin de fonctionner à un débit de données réduit, la configuration (812) dudit canal afin de fonctionner à un débit de données plus élevé.

12. Système selon la revendication 9, 10 ou 11, dans lequel le récepteur (108) comprend une unité de traitement exécutant un programme, le programme étant capable de transmettre un message ascendant au système de point de départ (102).

13. Système selon la revendication 12, dans lequel ledit message comprend un numéro de canal.

14. Système selon la revendication 12, dans lequel ledit message comprend un numéro de canal et un numéro de canal précédent.

15. Système selon la revendication 12, dans lequel le message comprend un identifiant de récepteur (108).

16. Système selon la revendication 12, dans lequel le programme comprend en outre une routine capable de transmettre (910) un message si ledit récepteur (108) est en transition entre un état opérationnel et un état de repos.
